# EUROPEAN PATENT SPECIFICATION

(11) **EP 2 641 785 B1**
(45) Date of publication and mention of the grant of the patent: **20.01.2016**
(21) Application number: 12160318.7
(22) Date of filing: 20.03.2012
(51) Int. Cl.: B60R 21/215, B60R 21/216

(54) **Airbag covering device**
Airbagabdeckungsvorrichtung
Dispositif de recouvrement d'airbag

(43) Date of publication of application: 25.09.2013
(73) Proprietor: Faurecia Innenraum Systeme GmbH, 76767 Hagenbach (DE)
(72) Inventor: Tromp, Stefan, 66557 Illingen (DE); Kuntz, Matthias, 76863 Herxheim (DE)
(74) Representative: Richardt Patentanwälte PartG mbB

(56) References cited:
- EP-A2- 1 112 899

## Description

The invention relates to an airbag covering device and an instrument panel comprising an airbag covering device.

In modern vehicles, airbags are commonly used as a vehicle safety device in order to protect an occupant of the vehicle from strong impact of the occupant's body onto interior components of the vehicle. In case of airbags mounted behind the interior panel of a vehicle, upon airbag expansion the airbag lid swings open. However, due to the extremely high opening speed of the airbag, the momentum of the airbag lid is also very high. In case of a touch of the opening lid to for example a window pane located in the vicinity of the lid, there is a high risk of breaking the window by the high energetic forces of the opening lid.

EP 1112899 A2 discloses an airbag covering device according to the preamble of claim 1.

DE 101 11597 A1 teaches an airbag mounted behind the interior panel of a vehicle, wherein the cover of the airbag consists of two halves which separate along a tear seam upon deployment of the airbag.

DE 10 2007 029769 B3 discloses an airbag cover with a rotation limiting device.

It is an objective of the present invention to provide for an improved airbag covering device and an improved instrument panel.

The invention is described by the independent claim. Preferred embodiments are described by the dependent claims.

An airbag covering device is presented, wherein the device comprises an airbag lid and a support element, wherein the lid comprises a first and a second part connected by a first hinge, wherein the first part is connected to the support element by a second hinge, wherein the second part is secured opposite to the second hinge to the support element by a restrain element of a definite length.

Embodiments of the invention may have the advantage that the rotation of the airbag lid is limited. Nevertheless, the airbag can fully open and free the airbag outlet opening preferably completely. Further, it is possible to adapt the length of the restrain element in combination with the sizes of the first and second part and the point of connection of the restrain element to the support element in such a manner that airbag expansion is possible with minimized loss of the airbag expansion speed.

In accordance with an embodiment of the invention, in the closed state the airbag lid covers an airbag outlet opening, wherein in the open state the airbag outlet opening is free from the airbag lid, wherein the device is adapted such that in the open state the angle between the first and the second part is less than 90 degrees. This may have the advantage that the total space occupied by the airbag lid in its open state is minimized. In case the airbag lid is located below a window pane of a vehicle, touching of the airbag lid with the window pane can be avoided. Further, generally the extension of the airbag lid into the passenger compartment is reduced.

In accordance with a further embodiment of the invention, the end of the second part opposite to the second hinge is secured to the support element by the restrain element. By securing the restrain element with one end to the end of the second part and with its end to the support element the mechanical stability of the covering device is increased. It is much easier to provide a secure connection point (point of attachment) of the restrain element to the second part in case this is performed at the very end of the second part than for example somewhere in between the end of the second part and the second hinge.

In accordance with a further embodiment of the invention, the first hinge and/or the second hinge are formed by material weakening.

In accordance with a further embodiment of the invention, the first part, the second part, the first hinge and the second hinge form a unitary structure. This permits to provide the airbag covering device in a cheap manner since manufacturing can be performed preferably in a single manufacturing step. Assembly of different parts into one airbag covering device is not necessary.

In accordance with a further embodiment of the invention, a point of attachment of the restrain element to the support element is located below or in the plane defined by the airbag lid in its closed state.

In accordance with a further embodiment of the invention, the restrain element is a flexible fabric and/or wire. As material, metals or plastic materials can be used. For example fiber reinforced plastics may be used for that purpose.

In accordance with the invention, in the closed state of the lid the plane of the second part forms a reference plane, wherein the point of attachment of the restrain element to the support element is located in between a first plane and a second plane, wherein the first and the second plane are perpendicular to the reference plane, wherein the first plane runs through the second hinge and the second plane runs through the point of attachment of the restrain element to the second part. This has the advantage, that a rotation of the second part around the first hinge can be controlled in such a manner that during expansion of the airbag a rotation of the second part around the first hinge can be avoided until almost complete passing of the airbag through the airbag outlet opening of the airbag covering device. Thus, for example the second part may be prevented from hindering a straight airbag expansion by acting as an obstacle in the counter-direction of the airbag expansion.

According to the invention the restrain element is un-stretched at free length in the closed state. Also, preferably the device is adapted such that the second part rotates about the first hinge not until the first part and the reference plane draw an angle of minimum 70 degrees.

An advantage is that it is possible to design the airbag covering device in such a manner that friction forces between the airbag and the lid during the airbag expansion are minimized.

In accordance with an embodiment of the invention, the second hinge acts as a deviating point for the restrain element upon opening of the airbag lid. In this case, preferably in the closed state the restrain element is pre-stressed. This may have the advantage that for example an unwanted rotation of the second part around the first hinge towards the direction of airbag expansion is prohibited. Thus, the airbag lid cannot swing into the passenger compartment with its second part and harm occupants of the vehicle.

In accordance with an embodiment of the invention, the restrain element is adapted to restrain an opening movement of the second part while the first part remains connected with the support element via the second hinge. Thus, during all times of the airbag expansion, it is ensured that the airbag lid is tightly connected and secured to the support element. Loosening of free parts which could be catapulted into the passenger compartment is prohibited.

In another aspect, the invention relates to an instrument panel of a vehicle, wherein the instrument panel comprises the airbag covering device as discussed above.

In accordance with an embodiment of the invention, the instrument panel can be arranged with respect to a window pane, wherein the airbag covering device is arranged such that upon opening of the airbag lid the second part has a minimum predefined closest distance to the window pane. In other words, the airbag covering device can be arranged in such a manner that the second part of the airbag lid will never touch the window pane. Thus, unwanted breaking of the window pane due to the airbag expansion and smashing of the airbag lid into the window pane is avoided.

In the following preferred embodiments of the invention are described in greater detail by way of example only making reference to the drawings in which:
- Fig. 1: is a schematic of an airbag covering device with an airbag in its expansion process,
- Fig. 2: is a schematic of an airbag covering device with a fully expanded airbag.

In the following, similar elements are noted by the same reference numerals.

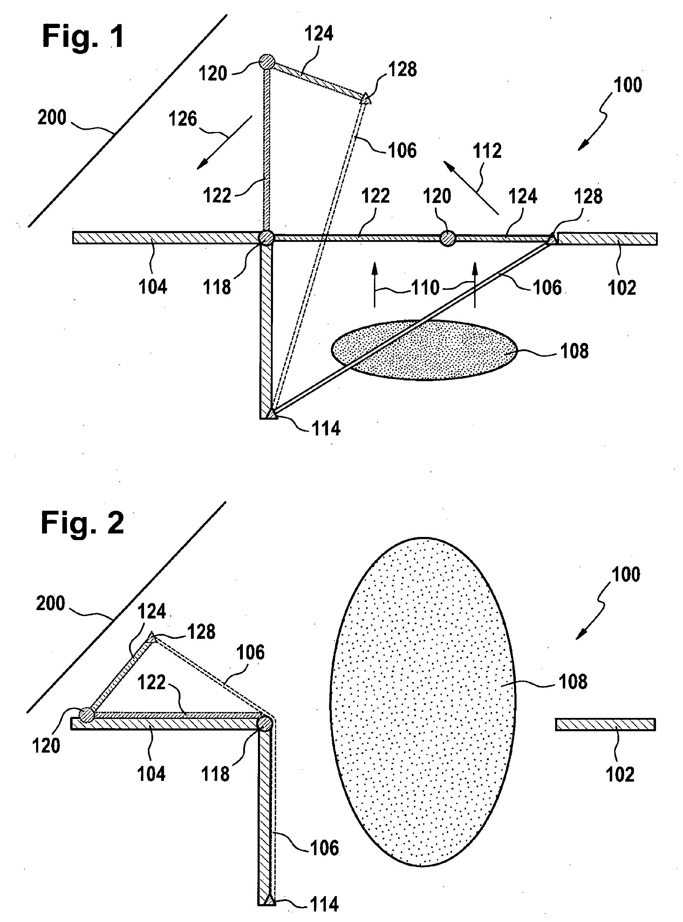

Fig. 1 shows an airbag covering device 100, wherein the device comprises an airbag lid and a support element 104, 102, wherein the lid comprises a part 122 and a part 124 connected by a hinge 120. The part 122 is connected to the support element 104 by a hinge 118. The part 124 is secured opposite to the hinge 120 at a point of attachment 128 to the support element 104 by a restrain element 106 of a definite length.

An airbag 108 is located within a chute channel of the airbag covering device. The straight lines in Fig. 1 denote the closed state of the airbag lid, i.e. in the non-expanded state of the airbag.

Upon expansion of the airbag 108, forces are acting in direction 110 due to the airbag expansion. The part 124 and the support element 102 are interconnected with each other via a breaking point, wherein upon exertion of the forces into direction 110, the interconnection between the part 124 and the support element breaks. As a result, the airbag lid swings open into direction 112 and starts to rotate around the hinge 118.

The restrain element 106 is interconnected via a point of attachment 114 to the support element 104. This point of attachment 114 is located below a plane defined by the lid (122, 124).

After expansion of the airbag 108 into direction 110, the airbag lid has swung open. The result of this state is indicated by dashed lines. For example, the first part 122 stands up straight, whereas the second part 124 is rotated around the hinge 120 due to the restraining force of the restrain element 106. At this time point, a hinge moment is still acting onto the first part 122 towards direction 126. The final result of the full airbag expansion is schematically shown in Fig. 2.

In Fig. 2, the airbag 108 is fully expanded. The part 122 is located close to or even on the support element 104, whereas the part 124 is sticking out from the part 122 and the support element 104 with an angle between the part 122 and the part 124 being around 45 degrees. Restrain element 106 is bent around the hinge 118 and restraining a further movement of the part 124 into the direction of the window pane 200. For example, the airbag covering device 100 may be located in an instrument panel of a vehicle, wherein the substrate 104 and the substrate 102 form part of the instrument panel. By using the restrain element, smashing of the part 124 of the lid into the window pane 200 is avoided.

### List of reference numerals

- 100: airbag covering device
- 102: support element
- 104: support element
- 106: restrain element
- 108: airbag
- 110: direction
- 112: direction
- 114: point of attachment
- 118: hinge
- 120: hinge
- 122: part of the lid
- 124: part of the lid
- 126: direction
- 128: point of attachment
- 200: window pane

## Claims

1. Airbag covering device (100), wherein the device (100) comprises an airbag lid and a support element (102; 104), wherein the lid comprises a first (122) and a second part (124) connected by a first hinge (120), wherein the first part (122) is connected to the support element (102; 104) by a second hinge (118), wherein the second part (124) is secured opposite to the second hinge (118) to the support element (102; 104) by a restrain element (106) of a definite length, wherein in the closed state of the lid the plane of the second part (124) forms a reference plane, **characterized in that** the point of attachment (114) of the restrain element (106) to the support element (102; 104) is located in between a first plane and a second plane, wherein the first and the second plane are perpendicular to the reference plane, wherein the first plane runs through the second hinge (118) and the second plane runs through the point of attachment (128) of the restrain element (106) to the second part (124), wherein in the closed state of the lid, the restrain element (106) is unstretched at free-length, wherein the device (100) is adapted such that the second part (124) rotates about the first hinge (120) not until the first part (122) and the reference plane draw an angle of minimum 70 degrees.

2. The device (100) of any of the previous claims, wherein in the closed state the airbag lid covers an airbag outlet opening, wherein in the open state the airbag outlet opening is free from the airbag lid, wherein the device (100) is adapted such that in the open state the angle between the first and the second part (124) is less than 90 degrees.

3. The device (100) of claim 1, wherein the end of the second part (124) opposite to the second hinge (118) is secured to the support element (102; 104) by the restrain element (106).

4. The device (100) of any of the previous claims, wherein the first hinge (120) and/or the second hinge (118) are formed by material weakenings.

5. The device (100) of any of the previous claims, wherein the first part (122), the second part (124), the first hinge (120) and the second hinge (118) form a unitary structure.

6. The device (100) of any of the previous claims, wherein a point of attachment (114) of the restrain element (106) to the support element (102; 104) is located below or in the plane defined by the airbag lid in its closed state.

7. The device (100) of any of the previous claims, wherein the restrain element (106) is a flexible fabric and/or wire.

8. The device (100) of any of the previous claims, wherein the restrain element (106) is adapted to restrain an opening movement of the second part (124) while the first part (122) remains connected with the support element (102; 104) via the second hinge (118).

9. An instrument panel of a vehicle, wherein the instrument panel comprises the airbag covering device (100) as claimed in any of the previous claims.

10. The instrument panel of claim 9, wherein the instrument panel can be arranged with respect to a window pane (200), wherein the airbag covering device (100) is arranged such that upon opening of the airbag lid the second part (124) has a minimum predefined closest distance to the window pane (200).

## Patentansprüche

1. Airbag-Abdeckungsvorrichtung (100), wobei die Vorrichtung (100) eine Airbag-Deckel und ein Trägerelement (102; 104) umfasst, wobei der Deckel ein erstes (122) und ein zweites Teil (124) umfasst, die durch ein erstes Scharnier (120) verbunden sind, wobei das erste Teil (122) durch ein zweites Scharnier (118) mit dem Trägerelement (102; 104) verbunden ist, wobei das zweite Teil (124) entgegengesetzt zum zweiten Gelenk (118) durch ein Rückhalteelement (106) einer bestimmten Länge am Trägerelement (102; 104) gesichert ist, wobei die Ebene des zweiten Teils (124), wenn der Deckel im geschlossenen Zustand ist, eine Bezugsebene bildet, **dadurch gekennzeichnet, dass** der Punkt der Befestigung (114) des Rückhalteelements (106) am Trägerelement (102; 104) zwischen einer ersten Ebene und einer zweiten Ebene liegt, wobei die erste und die zweite Ebene senkrecht sind zur Bezugsebene, wobei die erste Ebene durch das zweite Scharnier (118) verläuft und die zweite Ebene durch den Punkt der Befestigung 128 des Rückhalteelements (106) am zweiten Teil (124) verläuft, wobei das Rückhalteelement 106, wenn der Deckel in einem geschlossenen Zustand ist, auf freie Länge ungestreckt ist, wobei die Vorrichtung (100) so ausgelegt ist, dass sich das zweite Teil (124) erst dann um das erste Scharnier (120) dreht, wenn das erste Teil (122) und die Bezugsebene einen Winkel von mindestens 70 Grad beschreiben.

2. Vorrichtung (100) nach einem der vorangehenden Ansprüche, wobei der Airbag-Deckel in seinem geschlossenen Zustand eine Airbag-Auslassöffnung abdeckt, wobei die Airbag-Auslassöffnung im offenen Zustand frei ist vom Airbag-Deckel, wobei die Vorrichtung (100) so ausgelegt ist, dass der Winkel zwischen dem ersten und dem zweiten Teil (124) im offenen Zustand kleiner ist als 90 Grad.

3. Vorrichtung (100) nach Anspruch 1, wobei das Ende des zweiten Teils (124), das dem zweiten Scharnier (118) entgegengesetzt ist, durch das Rückhalteelement (106) am Trägerelement (102; 104) gesichert ist.

4. Vorrichtung (100) nach einem der vorangehenden Ansprüche, wobei das erste Scharnier (120) und/oder das zweite Scharnier (118) durch Materialschwächungen ausgebildet sind.

5. Vorrichtung (100) nach einem der vorangehenden Ansprüche, wobei das erste Teil (122), das zweite Teil (124), das erste Scharnier (120) und das zweite Scharnier (118) eine einheitliche Struktur bilden.

6. Vorrichtung (100) nach einem der vorangehenden Ansprüche, wobei ein Punkt der Befestigung (114) des Rückhalteelements (106) am Trägerelement (102; 104) unter oder in der Ebene liegt, die vom Airbag-Deckel in seinem geschlossenen Zustand definiert wird.

7. Vorrichtung (100) nach einem der vorangehenden Ansprüche, wobei das Rückhalteelement (106) ein flexibles Gewebe und/oder ein flexibler Draht ist.

8. Vorrichtung (100) nach einem der vorangehenden Ansprüche, wobei das Rückhalteelement (106) dafür ausgelegt ist, eine Öffnungsbewegung des zweiten Teils (124) zu hemmen, während das erste Teil (122) über das zweite Scharnier (118) mit dem Trägerelement (102; 104) verbunden bleibt.

9. Instrumententafel für ein Fahrzeug, wobei die Instrumententafel die Airbag-Abdeckungsvorrichtung (100) nach einem der vorangehenden Ansprüche umfasst.

10. Instrumententafel nach Anspruch 9, wobei die Instrumententafel in Bezug auf eine Fensterscheibe (200) angeordnet ist, wobei die Airbag-Abdeckungsvorrichtung (100) so angeordnet ist, dass das zweite Teil (124) beim Öffnen des Airbag-Deckels einen vordefinierten Mindestabstand zur Fensterscheibe (200) hat.

## Revendications

1. Dispositif d'habillage d'airbag (100), où le dispositif (100) comprend un couvercle d'airbag et un élément support (102 ; 104), où le couvercle comprend une première (122) et une seconde (124) parties reliées par une première charnière (120), où la première partie (122) est reliée à l'élément support (102 ; 104) par une seconde charnière (118), où la seconde partie (124) est fixée en face de la seconde charnière (118) sur l'élément support (102 ; 104) par un élément de retenue (106) d'une longueur définie, où, dans le cas du couvercle en position fermée, le plan de la seconde partie (124) forme un plan de référence, **caractérisé en ce que** le point de fixation (114) de l'élément de retenue (106) sur l'élément support (102 ; 104) est situé entre un premier plan et un second plan, où le premier et le second plans sont perpendiculaires par rapport au plan de référence, où le premier plan passe par la seconde charnière (118) et le second plan passe par le point de fixation (128) de l'élément de retenue (106) sur la seconde partie (124), où, dans le cas du couvercle en position fermée, l'élément de retenu (106) n'est pas étiré à une longueur libre, où le dispositif (100) est adapté de sorte que la seconde partie (124) est en rotation sur la première charnière (120) pas jusqu'à la première partie (122) et le plan de référence forme un angle de 70 degrés au minimum.

2. Dispositif (100) selon l'une quelconque des revendications précédentes, où, en position fermée, le couvercle de l'airbag recouvre l'orifice de sortie de l'airbag, où, en position ouverte, l'orifice de sortie de l'airbag se trouve dégagé du couvercle de l'airbag, où le dispositif (100) est adapté de sorte qu'en position ouverte l'angle entre la première et la seconde partie (124) est inférieur à 90 degrés.

3. Dispositif (100) selon la revendication 1, où l'extrémité de la seconde partie (124) en face de la seconde charnière (118) est fixée sur l'élément support (102 ; 104) par l'élément de retenue (106).

4. Dispositif (100) selon l'une quelconque des revendications précédentes, où la première charnière (120) et/ou la seconde charnière (118) sont formées par des fragilisations du matériau.

5. Dispositif (100) selon l'une quelconque des revendications précédentes, où la première partie (122), la seconde partie (124), la première charnière (120) et la seconde charnière (118) forment une structure unitaire.

6. Dispositif (100) selon l'une quelconque des revendications précédentes, où un point de fixation (114) de l'élément de retenue (106) sur l'élément support (102 ; 104) est situé en dessous ou dans le plan défini par le couvercle de l'airbag dans sa position fermée.

7. Dispositif (100) selon l'une quelconque des revendications précédentes, où l'élément de retenue (106) est un tissu flexible et/ou un câble.

8. Dispositif (100) selon l'une quelconque des revendications précédentes, où l'élément de retenue (106) est adapté pour retenir un mouvement d'ouverture de la seconde partie (124) pendant que la première partie (122) reste reliée avec l'élément support (102 ; 104) via la seconde charnière (118).

9. Tableau de bord d'un véhicule, où le tableau de bord comprend le dispositif d'habillage de l'airbag (100) tel que revendiqué selon l'une quelconque des revendications précédentes.

10. Tableau de bord selon la revendication 9, où le tableau de bord peut être disposé par rapport à un panneau vitré (200), où le dispositif d'habillage de l'airbag (100) est disposé de sorte que, lors de l'ouverture du couvercle de l'airbag, la seconde partie (124) possède une distance prédéfinie la plus proche d'un minimum par rapport au panneau vitré (200).
